# EUROPEAN PATENT SPECIFICATION

(11) **EP 0 491 915 B1**
(45) Date of publication and mention of the grant of the patent: **22.09.1999**
(21) Application number: 91912881.9
(22) Date of filing: 18.07.1991
(51) Int. Cl.: A01N 25/34, A01N 25/04, B65D 65/38

(54) **GEL FORMULATIONS FOR HAZARDOUS PRODUCTS**
GELFORMULIERUNGEN FÜR GEFÄHRLICHE STOFFE
FORMULATIONS DE GEL POUR PRODUITS DANGEREUX

(30) Priority: 18.07.1990 US 554615; 04.04.1991 US 680307
(43) Date of publication of application: 01.07.1992
(73) Proprietor: RHONE-POULENC AGROCHIMIE, 69009 Lyon (FR)
(72) Inventor: CHEN, Chi-Yu, R., Raleigh, NC 27615 (US); GOUGE, Samuel, T., Raleigh, NC 27614 (US); HODAKOWSKI, Leonard, E., Raleigh, NC 27615 (US); WEBER, Paul, J., Durham, NC 27713 (US)
(74) Representative: Bentham, Stephen
(86) International application number: EP9101349
(87) International publication number: WO9201375

(56) References cited:
- EP-A- 0 347 220
- EP-A- 0 420 497
- EP-A- 0 449 773
- WO-A-91/05714
- GB-A- 2 067 407
- US-A- 2 870 058
- US-A- 3 171 779
- US-A- 3 630 896
- PATENT ABSTRACTS OF JAPAN vol. 4, no. 30 (C-2)(512) 15 March 1980 & JP,A,55 004 336 ( KIYOURITSU SANITARII K.K. ) 12 January 1980 see abstract & WPI, FILE SUPPLIER, Derwent Publications Ltd., London, GB; AN=80-13757C (08) see abstract
- WORLD PATENTS INDEX LATEST Section Ch, Week 8739, 25 November 1987 Derwent Publications Ltd., London, GB; Class C, AN 87-274684/39 & JP,A,62 192 301 (KAGAKU E C KOGYO KK) 22 August 1987 see abstract
- RESEARCH DISCLOSURE, no.289, may 1988, pages 281-284, New York, NY, US, see page 281, column 1, paragraph 1 see page 283, column 1, paragraph 3 - column 2, paragraph 3
- Römpps Chemie-Lexikon, 1988, page 4250-1, Franckh'sche Verlagsbuchhandlung Stuttgart

## Description

The invention relates to new containerisation systems containing water dispersible organic gels The containerisation systems are suitable for containing hazardous product rendering them safe to handle and for the environment.

At present, most hazardous liquids are stored in metal drums or, where smaller quantities are required, plastic containers.

Hazardous compounds, especially agrochemical compounds, are formulated in various compositions. Liquid compositions are most convenient for farmers because of the relative ease with which they can be handled. There are, nevertheless, difficulties in handling such liquid compositions. There is a danger of spillage or leakage if there are holes in the containers previously used or if they are dropped. Although secure containers resistant to shock can he used, in the event of an accident, for example during transportation, the risk remains of spillage or leakage with rapid loss of liquid, for example, leaking onto the ground.

It has been difficult to provide a formulation and a containerisation system (i.e container) which safeguards those handling it, including farmers and transporters, and the environment.

The present invention seeks to provide a new formulation system to contain agrochemicals which is safe to handle, and for the environment.

The invention further seeks to provide a new formulation system for agrochemicals which is readily, rapidly and easily soluble and/or dispersible in water.

The invention also seeks to provide a new formulation system for agrochemicals which is as much condensed as possible, using the least amount of space.

The invention also seeks to provide a new formulation system to contain hazardous compounds, e.g., agrochemicals which diminishes the risks of pollution.

It is also known that liquid agrochemicals may be contained in soluble bags or sachets made from films. See for example EP-A-0,347,220 and EP-A-0,449,773 (published after the priority date of the present application). However, such films may crack and break and thus, cause spillage of the agrochemicals they contain and create contamination problems. In fact, there are a variety of defects which may be present in films, which lead to weaknesses of film and consequently a potential source of leakage. The presence of air bubbles, or dust particles or foreign bodies, or gel particles or thin points on or in the film are all potential weak points. If a film with such a weak point is subjected to a lot of handling or physical shocks, the film may fail at that point. This is especially a problem in the agrochemical industry where containers may be subjected to rough or unsafe handling by distributors or farmers.

The invention therefore seeks to avoid leakage through pinholes when an agrochemical containing bag is used. Such pinholes are rare, but only one pinhole among thousands of bags is enough to cause a lot of trouble, because the liquid going through the pinhole contaminates all of its environment.

The invention also seeks to avoid breakage of the container which contains an agrochemical formulation. When the container is rigid, there is substantial possibility of simple breakage. With a liquid in a bag this possibility is somewhat reduced, but the liquid still transmits the shocks and there is the problem of hydraulic hammer effect. An object of the instant invention is to avoid, or at least to partially reduce, this hydraulic hammer effect. It has been proposed to reduce the possibility of breakage by means of an air space in the bag, but this represents some loss of storage space.

The invention also seeks to provide a formulation or composition for hazardous compounds which dissipates, as much as possible, the energy of a shock to a container from outside.

The invention also seeks to provide a shock absorbing formulation system for containing agrochemicals, e.g., pesticides or plant protection agents or plant growth regulators.

It was known to use gel formulations for pharmaceuticals or cosmetics, but there is practically no risk of pollution or contamination of environment when handling such products, in contrast to pesticides and agrochemicals. Furthermore, the gels used for pharmaceutical or cosmetical purposes are generally water-based, so that it was unobvious to obtain gels which are convenient for water soluble sachets or bags, nor for pesticide containing water soluble sachets or bags, nor for shock absorption purposes for such bags.

Another possibility is to have agrochemicals in the form of wettable powders in a bag which may be water soluble. However, not all agrochemicals may be used under the form of a wettable powder, and even these powders are wettable, the length of the time to get the powder wetted (wetting time) may cause some technical problems.

As already stated, other containing systems for pesticides which are safe for the environment have been proposed in the past, especially those containing liquid in soluble bags or sachets. However, it may happen that the bags have pinholes; the contained liquid leaks in such conditions and may pollute the environment.

Even though thixotropic liquid may be used, this possibility of leakage through pinholes remains when shipping, because the shipping creates a move which causes the thixotropic liquid to become more fluid.

Furthermore, even the non aqueous liquid contained in the known water soluble bags may have a low, but non zero, content of water, and this content, even though it is low, may cause bag breakage upon freezing.

The present invention seeks to provide a new formulation system for agrochemicals which quickly dissolves when put into water and which is not damaged by normal freezing.

The invention also seeks to provide a formulation system wherein less solvent is needed in the formulation of the pesticide, which is cost saving both in shipping and manufacturing.

The invention further seeks to provide a new formulation system for agrochemicals which reduces the risks of clogging the spray nozzles or the filters of spray tanks.

The present invention provides a containerisation system comprising a water dispersible organic gel in a water soluble or water dispersible bag, wherein the gel is a continuous system having a phase difference phi between the controlled shear stress and the resulting shear strain such that tg(phi) is less than or equal to 1.5, and having a spontaneity less than 75 which gel comprises effective amounts of:
a hazardous product;
optionally organic solvent;
a water soluble or water dispersible surfactant which comprises a non ionic surfactant and optionally an anionic or amphoteric (e.g. anionic) surfactant, and which is able to form a liquid mixture, preferably a liquid phase, with the hazardous product, i.e. active ingredient, and the organic solvent, if present, at a temperature above 70°C, preferably above 50°C;
a gelling agent which is liquid or solid at 23°C and if solid has a particle size lower than 100 microns, preferably lower than 20 microns, and which is soluble at a concentration of at least 10% by weight in the liquid mixture of hazardous product, surfactant and organic solvent, if present; and
less than 3% by weight of water, preferably less than 1%.

The liquid mixture of surfactant, hazardous product and optionally organic solvent may be a single continuous phase or it may be in the form of an emulsion.

The anionic or amphoteric surfactant may be zwitterionic.

The gel used in the present invention may optionally comprise one or more of the further following components:
an organic solvent or mixture of organic solvents in which the hazardous product is soluble (e.g. completely soluble) at the concentration present in the gel;
a dispersent;
a secondary thickener; and/or
other additives, such as stabiliser(s), antifoaming agent(s), buffer(s), antifreezing agent(s).

Among the gels used in the invention as hereabove defined, some particular gels are preferred, especially those comprising by weight:
5 to 95%, preferably 10 to 90% more preferably 25 to 80%, of hazardous product;
1 to 50%, more preferably 2 to 15%, of surfactant,
0.1 to 50%, more preferably 2 to 10%, of gelling agent
0.1 to 30%, more preferably 1 to 25% of secondary thickener,
0.80% of solvent, more preferably 3 to 50%,
0 to 20% of other additives (as herein before defined), preferably, 0.1 to 10%.

When gels used in the invention contain a dispersant, they preferably comprise by weight 1 to 25%, more preferably 2 to 8% of dispersant.

According to a particular feature of the invention, the components of the compositions are chosen in such a way that the gels have viscosity of 600 to 30,000 centipoises, more preferably of 1000 to 12000 centipoises (those viscosities are Brookfield viscosities measured with a viscosimeter in form of a flat plate rotating at 20 revolutions per minute).

By the wording continuous system, it is meant a material which is visually homogeneous, that is to say which has the visual appearance to have only one physical phase; this does not exclude the possibility of having small solid particles dispersed therein, provided these particles are small enough not to constitute a visible separate physical phase.

It is known that a gel is generally a colloid in which the dispersed phase has combined with the continuous phase to produce a viscous, jelly-like product; it is also a dispersed system consisting typically of a high molecular weight compound or aggregate of small particles in very close association with a liquid. In the gels used in the invention, the hazardous product (or active ingredient) may be in a soluble form, or in a dispersed form such as in a suspension.

According to a particular feature of the invention, the components of the compositions are chosen in such a way that the gels used in the invention have a specific gravity greater than 1, preferably greater than 1.05, more preferably greater than 1.1.

According to another particular feature of the invention, the components of the compositions are chosen in such a way that the gels contained in the bags of the invention preferably have a spontaneity (as hereafter defined) less than 25.

The spontaneity is assessed according to the following method: A mixture of 1 ml gel with 99 ml water are put into a 150 ml glass tube which is stoppered and inverted through 180° (upside down). The number of times required to completely disperse the gel is called the spontaneity.

By the word surfactant, it is meant an organic material which is able to substantially reduce the surface tension of water which is 73 dynes/cm at 20°c.

Surfactants which are particularly suitable for the invention are defined by the following test: according to this test, the liquid active ingredient, in the organic solvent if present in the gel, (50g in total) and surface-active adjuvant (5 g) are added to an amount of water, at 50°C, which is sufficient to bring the volume of the mixture to 100 ml; the mixture is agitated so as to give a homogenous emulsion and this is left to stand for 30 minutes at 50°C in a graduated cylinder; the amount of oily layer which may have separated out (and thus formed a distinct liquid phase) must then be less than 20 ml.

The surfactant which may be used in the invention may be selected from among those of the following list (which is non limitative):
non ionic surfactant: alkanolamides, poly condensates of ethylene oxide with fatty alcohols, fatty esters, or fatty amines, or substituted phenols (particularly alkylphenols or arylphenols); block copolymers with ethoxy and propoxy groups; esters of fatty acids with polyols such as glycerol or glycol; polysaccharides; organopolysiloxanes; sorbitan derivatives; ethers or esters of sucrose or glucose;
anionic or amphoteric surfactants: salts of lignosulphonic acids, salts of phenyl sulphonic or naphthalene sulphonic acids, diphenyl sulfonates; alkylaryl sulfonates; sulfonated fatty alcohols or amines or amides; poly condensates of ethylene oxide with fatty acids and their sulfate or sulfonates derivatives; salts of sulphosuccinic or sulfosuccinamic acid esters; taurine derivatives (particularly alkyltaurates); betaine derivatives; phosphoric esters of alcohols or of polycondensates of ethylene oxide with phenols; and sulphate, sulphonate and phosphate functional derivatives of the above compounds.

By the wording "gelling agent", it is meant a material corresponding to the active ingredient in such a way that, when mixed, at 50/50 w/w and 25°C, with (and optionally ground with) an organic solvent wherein the active ingredient is soluble, a gel is obtainable. According to the present invention, a gel is essentially a material which has a phase difference phi between the controlled shear stress and the resulting shear strain such that tg(phi) is less than or equal to 1.5, preferably less than or equal to 1.2. Tg(phi) is the tangent of the angle phi (or phase difference). The measurement of phi is made by means of a rheometer having a flat fixed plate and a rotating cone above this plate such that the angle between them is less than 10°, preferably 4°. The cone is caused to rotate by means of a controlled speed motor; the rotation is a sinusoidal one, i.e., the torque and the angular displacement change as a sine function with time. This angular displacement corresponds to the hereabove mentioned shear strain; the torque of the controlled speed motor (which causes the angular displacement) corresponds to the hereabove mentioned controlled shear stress.

Gelling agents which may be used in the invention are tetramethyl decyne diol, ethoxylated dialkylphenol, methylated clay, propylene carbonate, hydrogenated caster oil, ethoxylated vegetable oil, diatomaceous earth, mixture of dioctyl sodium sulfosuccinate and sodium benzoate, and mixtures of hexanediol and hexynediol.

Preferably if the gelling agent is solid it has a particle size of less than 40 microns, more preferably less than 10 microns.

The expression "hazardous product" as used herein is defined as a product which may cause damage to the environment or be injurious to a person handling it.

According to one main and preferred feature of the invention, the hazardous product is an active ingredient which is an agrochemical, and more precisely a pesticide or a plant protection agent (including plant growth regulators or plant nutrient).

The invention is not limited to some specific agrochemicals; a list of the many agrochemicals which can be used in the invention includes:
Fungicides such as Triadimefon, Tebuconazole, Prochloraz, Triforine, Tridemorph, Propiconazole, Pirimicarb, Iprodione, Metalaxyl, Bitertanol, Iprobenfos, Flusilazol, Fosetyl, Propyzamide, Chlorothalonil, Dichlone, Mancozeb Anthraquinone, Maneb, Vinclozolin, Fenarimol, Bendiocarb, Captafol, Benalaxyl, Thiram;
Herbicides (or defoliants) such as quizalofop and its derivatives, Acetochlor, Metolachlor, Imazapur And Imazapyr, Glyphosate And Gluphosinate, Butachlor, Acifluorfen, Oxyfluorfen, Butralin, Fluazifop-butyl, Bifenox, Bromoxynil, Ioxynil, Diflufenican, Phenmedipham, Desmedipham, Oxadiazon, Mecopropo, MCPA, MCPB, MCPP, Linuron, Isoproturon, Flamprop And Its Derivatives, Ethofumesate, Diallate, Carbetamide, Alachlor, Metsulfuron, Chlorsulfuron, Chlorpyralid, 2,4-d, Tribufos, Triclopyr, Diclofop-methyl, Sethoxydim, Pendimethalin, Trifluralin, Ametryn, Chloramben, Amitrole, Asulam, Dicamba, Bentazone, Atrazine, Cyanazine, Thiobencarb, Prometryn, 2-(2-chlorobenzyl)-4,4-dimethyl-1,2-oxazolidin-3-one, Fluometuron, Napropamide, Paraquat, Bentazole, Molinate, Propachlor, Imazaqin, Metribuzin, Tebuthiuron, and Oryzalin;
Insecticides or nematicides such as Ebufos, Carbosulfan, Amitraz, Vamidothion, Ethion, Triazophos, Propoxur, Phosalonc, Permethrin, Cypermethrin, Parathion, Methylparathion, Diazinon, Methomyl, Malathion, Lindane, Fenvalerate, Ethoprophos, Endrin, Endosulfan, Dimethoate, Dieldrin, Dicrotophos, Dichlorprop, Dichlorvos, Azinphos And Its Derivatives, Aldrin, Cyfluthrin, Deltamethrin, Disulfoton, Chlordimeform, Chlorpyrifos, Carbaryl, Dicofol, Thiodicarb, Propargite, Demeton, and Phosalone;
Plant growth regulators such as gibberllic acid, ethrel or ethephon, cycocel , Chlormequat, Ethephon, and Mepiquat.

In order to assess whether a surface-active adjuvant possesses dispersing properties and may be a dispersant according to the invention, the following test is carried out: an aqueous suspension (100 ml) containing kaolin or atrazine (50 g), in the form of solid particles having a particle size between 1 and 10 microns, and surface-active adjuvant (5 g) is left to stand at 20°C for 30 minutes in a graduated cylinder (kaolin is used when the dispersing agent is able to disperse a hydrophilic solid. Atrazine is used when the dispersing agent is able to disperse a hydrophobic solid). After standing, 9/10th (nine-tenths) of the volume of the suspension, situated in the upper part of the suspension, is removed, without agitation, and the solids content (residue after evaporation of the water) of the remaining tenth is measured; this solids content must not exceed 12% by weight of the solids content of 100 ml of the suspension on which the test is carried out.

The dispersant which may be used in the invention may be selected from among those of the following list (which is non limitative): salts of lignosulphonic acids such as calcium lignossulfonate, salts of phenyl sulphonic or naphthalene sulphonic acids, condensed naphthalene sulfonic acid; poly condensates of ethylene oxide with fatty alcohols or fatty acids or fatty esters or fatty amines, or substituted phenols (particularly alkyphenols or arylphenols); salts of sulphosuccinic acid esters, such as sodium sulfosuccinate; taurine derivatives (Particularly alkyltaurates); phosphoric esters of alcohols or of polycondensates of ethylene oxide with phenols; esters of polyols and of fatty acids or sulphuric acid or sulphonic acids or phosphoric acids; glyceryl esters, especially esters with fatty acids such as glyceryl stearate; ethylene glycols; and the like.

The secondary thickener is a compound which increases the viscosity of a gel or a liquid.

The secondary thickener which may be used in the invention may be selected from among the following list (which is non limitative): fumed silica; hydroxyethyl cellulose, carboxymethylcellose; organically modified attapulgite or montmorillonite clay; hardened castor oil; cetyl and stearyl alcohols or esters; polyethylene glycols; glyceryl hydroxystearate, polyvinylalcohol; salts of sulphosuccinic acid esters such as the dioctyl sodium sulfosuccinate; salts of benzoic acid such as sodium benzoate; and alkyl sulphates.

The gels used in invention can be prepared or manufactured by any known method. A convenient way is to mix together the different constituents of the mixture/composition and to stir them, optionally with grinding or milling and/or heating. Sometimes it is easier to operate with a slow addition of the constituents of the composition and it might be also useful if the gelling agent is added last.

The chemical nature of the enveloping film constituting the bags in the containerisation systems of the invention can vary quite widely. Suitable materials are water soluble (or possibly water dispersible) materials which are insoluble in the organic solvents used to dissolve or disperse the agrochemical active ingredient. Specific suitable materials include polyethylene oxide, such as polyethylene glycol; starch and modified starch; alkyl and hydroxyalkylcellulose, such as hydroxymethylcellulose, hydroxyethylcellulose, hydroxypropylcellulose; carboxymethylcellulose; polyvinylethers such as poly methyl vinylether; poly(2,4-dimethyl-6-triazolyethylene); poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs; but preferably the enveloping film comprises or is made from polyvinylalcohol (PVA).

Preferred material for constituting the bags for the gels used in the invention are polyethylene oxide or methylcellulose, or polyvinylalcohol. When polyvinylalcohol is used, it is advantageously a 40-100%, preferably 80-99%, alcoholysed or hydrolysed, polyvinyl acetate film.

The water soluble films which are used to make the water soluble bags are known. In order to make a bag, the film needs to be shaped (possibly partially sealed) and then filled with the gel. Generally the gels are able to flow, even if it is a slow rate due to the high viscosity. A container which is used to contain the gels cannot be easily emptied due to this high gel viscosity (a reason why the gels were not used up to now in the agriculture). When filled, the bag has to be finally sealed, generally heat sealed, to be closed.

Further information may be found in the following copending applications, the disclosures of which are incorporated herein by reference: application of Leonard E. Hodakowski, Chi-Yu R. Chen, Samuel T. Gouge, Paul J. Weber for "Gel Formulations for Use in Toxic or Hazardous Product Containerization Systems" filed April 4, 1991; application of David Edwards and William McCarthy for "Laminated Bags for Containerization of Toxic or Hazardous Materials" filed April 4, 1991; application of Leonard E. Hodakowski, Chi-Yu R. Chen, Samuel T. Gouge, and Paul J. Weber for "Water Dispersible Gel Formulations" filed April 4, 1991; application of Leonard E. Hodakowski, Ricky W. Couch, Samuel T. Gouge and Robert C. Ligon for "Gel Formulations" filed April 4, 1991; and application of Samuel T. Gouge, David P. Downing, Spencer B. Cohen, Allan J. Luke, Robert D. McLaughlin and James E. Shue for "Bag In A Bag for Containerization of Toxic or Hazardous Material" filed April 4, 1991.

The following examples are given for illustrative purposes and should not be understood as restricting the invention. EXAMPLE 1

A gel was made by stirring at 50°C a mixture of:
Active ingredient: 2,4-D phenoxy benzoic acid isooctyl ester: 64.8%
Solvent: aromatic solvent with flash point of 65°C: 24.2%
Surfactant: a mixture of
   a non ionic/sulfonate blended emulsifier 4%
   and calcium alkylbanzene sulfonate 1%
Gelling agent: mixture of dioctylsulfosuccinate salt and sodium benzoate: 6%.

The mixture is stirred and shaken until each component is dissolved or dispersed.

During stirring, a dissolution appears, and thereafter a gellation. Gellation is increased during cooling at room temperature (20°C).

The Brookfield viscosity of the gel is 3000 centipoises.

The emulsion stability is good in the above described test.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m upon the ground. No breaking or leakage is observed.

The bag is put in a tank containing water under gentle agitation (such as that obtained with pump recycling). It is dispersed within a 3 minute interval. There is no clogging in the filter which is a 100 mesh screen.

Another bag made in the same way as the previous one is tested for pinhole protection. A needle (diameter: 0.6 mm) is passed through the bag. It is observed a small droplet which forms at the locus where the needle passed, but this droplet was small enough not to drop from the bag and not to flow along the bag.

### EXAMPLE 2

The procedure of example 1 was repeated, except a mixture containing the following adjuvants was used:
Surfactant: non ionic/sulfonate blended emulsifier:5.2%
Gelling agent: tetramethyl decynediol 30%.

The Brookfield viscosity of the gel is 3000 centipoises.

The emulsion stability is good in the above described test.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m upon the ground. No breaking or leakage is observed.

The bag is put in a tank containing water under gently agitation (such as that obtained with pump recycling). It is dispersed within a 3 minute interval. There is no clogging in the filter which is a 100 mesh screen.

### EXAMPLE 3

The procedure of example 1 was repeated, except a mixture containing the following adjuvants was used:
Surfactant: non ionic/sulfonate blended emulsifier: 21.5%.
   and calcium alkylbenzene sulfonate: 3.7%
Gelling agent: ethoxylated dialkyphenol: 10%

The Brookfield viscosity of the gel is 3000 centipoises.

The emulsion stability is good in the above-described test.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1

The bag is then dropped 10 times from 1.2 m upon the ground. No breaking or leakage is observed.

The bag is put in a tank containing water under gentle agitation (such as that obtained with pump recycling). It is dispersed within a 3 minute interval. There is no clogging in the filter which is a 100 mesh screen.

### EXAMPLE 4

A gel was made by stirring at 50°C a mixture of:
active ingredient:
   bromoxynil acid (octanoate ester): 18.65%
   bromoxynil acid (heptanoate ester): 13.85%
   methylchloropropionic acid (isooctyl ester): 37.4%
solvent: aromatic solvent with a flash point of 38°C: 11.1%
Surfactant: non ionic/sulfonate blender emulsifier: 13%
Gelling agent mixture:
   hydrogenated castor oil 3%
   ethoxylated vegetable oil 3%

These materials are mixed together while shearing with attritor mixer. The product started to gel in a few minutes.

The Brookfield viscosity of the gel is 3150 centipoises.

The emulsion stability is good in the above described test.

The spontaneity is 20.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m upon the ground. No breaking or leakage is observed.

The bag is put in a tank containing water under gentle agitation (such as that obtained with pump recycling). It is dispersed within a 10 minute interval. There is no clogging in the filter which is a 50 mesh screen.

### EXAMPLE 5

The procedure of example 4 was repeated, except a mixture containing the following components was used:
Active ingredient:
   bromoxynil octanoate 18.4%
   bromoxynil heptanoate: 14.0%
   methyl chloropropionic acetic acid (isooctyl ester) 36.6%
surfactant mixture: non ionic/sulfonate blended emulsifier 9.0%
Gelling agent: diatomaceous earth 17.0%
and dioctyl ester of sodium sulfosuccinic acid and sodium benzoate 2.0%
Dispersant: sodium sulfonate of naphthalene formaldehyde condensate 3.0%

These materials are mixed together while shearing with attritor mixer. The product started to have the appearance of a smooth paste, and is a gel in a few minutes.

The Brookfield viscosity of the gel is 9000 centipoises.

The emulsion stability is good in the above described test.

The spontaneity is 9.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m upon the ground. No breaking or leakage is observed.

The bag is put in a tank containing water under gentle agitation (such as that obtained with pump recycling). It is dispersed within a 10 minute interval. There is no clogging in the filter which is 50 mesh screen.

### EXAMPLE 6

The procedure of example 5 was repeated, except a mixture containing the following components was used:
Active ingredient:
   bromoxynil octanoate 31.5%
   bromoxynil heptanoate 31.5%
   atrazine 44.58%
Solvent: same as in example 1 23.25%
Gelling agent: mixture of dioctyl sodium sulfosuccinate and sodium benzoate. 1.5%
Stabilizer: alkyl sulfate 2.15%
Surfactants:
   ethoxylated/propoxylated block copolymer with alkylphenol 3.6%
   alkylarylsulfonate of an amine 5%
   Antifreeze agent: polyethylene glycol 1%
   Antifoam: polyorganosiloxane 0.5%

These materials are mixed together and passed through a bead mill. The product gets the appearance of a gelatineous mixture; after about 5 hours, it becomes much more viscous.

The Brookfield viscosity of the gel is 9100 centipoises and is 5200 after stirring for 4 minutes.

The emulsion stability is good in the above described test.

The spontaneity is 11.

1100 g of the gel are poured into a 1 liter bag made of a film of PVA (88% hydrolysed polyvinyl acetate; cold water soluble; thickness: 75 microns). The bag, which is almost full (about 95% v/v), is heat sealed. The density both of the gel and of the bag containing the gel is 1.2.

The bag is then dropped 10 times from 1.2 m upon the ground. No breaking or leakage is observed.

The bag is put in a tank containing water under gentle agitation (such as that obtained with pump recycling). It is dispersed within a 5 minute interval. There is no clogging in the filter which is a 100 mesh screen.

### EXAMPLE 7

The procedure of example 6 was repeated, except a mixture containing the following components was used:
Active ingredient:
   bromoxynil octanoate 33.7%
   methyl chloropropionic acetic acid (isooctyl ester): ester 36.2%
Solvent: aromatic solvent with flash point of 65°C: 3.0%
Surfactant:
   non ionic/sulfonate blended emulsifier 8.5%
   and calcium dodecyl benzene sulfonate 1.0%
Gelling agent: tetramethyl decyne diol 17.6%

These materials are mixed together while shearing with attritor mixer. The product started to have the appearance of a smooth paste, and is a gel in a few minutes.

The Brookfield viscosity of the gel is 2200 centipoises.

The emulsion stability is good in the above described test.

The spontaneity is 14.

1100 g of this gel are put in a 1 liter bag made of a film of PVA (88% hydrolysed polyvinyl acetate; cold water soluble; thickness: 55 microns). The bag, which is almost full (about 95% v/v), is beat sealed. The density both of the gel and of the bag containing the gel is 1.1.

The bag is then dropped 10 times from 1.2 m upon the ground. No breaking or leakage is observed.

The bag is put in a tank containing water under gentle agitation (such as that obtained with pump recycling). It is dispersed within a 5 minute interval. There is no clogging in the filter which is a 100 mesh screen.

### EXAMPLE 8

The procedure of example 7 was repeated, except a mixture containing the following components was used:

Active ingredient and solvent are the same as in example 8, and amount of active ingredient is the same, solvent is the same but the amount is 10.6%
Surfactant mixture:
   polyarylphenol ethoxylated and 6%
   calcium dodecyl benzene sulfonate 2%
Gelling agent: mixture of hexane diol and hexyne diol: 11.5%

These materials are mixed together at 90°C while shearing with attritor mixer. The product started to have the appearance of a smooth paste, end is a gel in a few minutes.

The Brookfield viscosity of the gel is 2500 centipoises.

The emulsion stability is good in the above described test.

The spontaneity is 5.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m upon the ground. No breaking or leakage is observed.

The bag is put in a tank containing water under gentle agitation (such as that obtained with pump recycling). It is dispersed within a 5 minute interval. There is no clogging in the filter which is a 100 mesh screen.

### EXAMPLE 9

The procedure of example 4 was repeated, except a mixture containing the following components was used:
Active ingredient:
   bromoxynil octanoate 33.5%
   bromoxynil heptanoate 33.5%
solvent:
   aromatic solvent with a flash point of 65°C: 17.5%
Surfactant:
   non ionic/sulfonate blended emulsifier 4.5%
   and calcium dodecyl benzene sulfonate 1.0%
Gelling agent: mixture of dioctyl sodium sulfosuccinate and sodium benzoate 4.25%
Antifoam: tetramethyl decyne diol 0.5%

These materials are mixed together at 50°C while shearing with attritor mixer. The product started to have the appearance of a smooth paste, and is a gel in a few minutes.

The Brookfield viscosity of the gel is 4850 centipoises.

The emulsion stability is excellent in the above described test.

The spontaneity is 10.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m upon the ground. No breaking or leakage is observed.

The bag is put in a tank containing water under gentle agitation (that is to say such as that obtained with pump recycling). It is dispersed within a 3 minute interval. There is no clogging in the filter which is a 100 mesh screen.

## Claims

1. A containerisation system comprising a water dispersible organic gel in a water soluble or water dispersible bag, wherein the gel is a continuous system having a phase difference phi between the controlled shear stress and the resulting shear strain such that tg(phi) is less than or equal to 1.5 and having spontaneity less than 75, which gel comprises effective amounts of:
a hazardous product;
optionally organic solvent;
a water soluble or water dispersible surfactant which comprises a non ionic surfactant and optionally an anionic or amphoteric surfactant, and which is able to form a liquid mixture with the hazardous product and organic solvent, if present, at a temperature above 70°C;
a gelling agent which is liquid or solid at 23°C and if solid has a particle size lower than 100 microns, and which is soluble at a concentration of at least 10% by weight in the liquid mixture of hazardous product, surfactant and organic solvent, if present; and
less than 3% by weight of water.

2. A containerisation system according to claim 1 wherein the hazardous product is an agrochemical.

3. A containerisation system according to claim 1 or 2 wherein the hazardous product is a plant protection agent, a plant growth regulator, a pesticide or a plant nutrient.

4. A containerisation system according to claim 1, 2 or 3, wherein the water soluble or water dispersible surfactant is able to form a liquid mixture with the hazardous product and organic solvent if present at a temperature above 50°C.

5. A containerisation system according to any one of the preceding claims wherein the gelling agent is liquid or a solid with a particle size lower than 20 microns.

6. A containerisation system according to any one of the preceding claims wherein the gel comprises less than 1% by weight of water.

7. A containerisation system according to any one of the preceding claims wherein the gel further comprises one or more of the following components:
an organic solvent or a mixture of organic solvents in which the hazardous product is soluble at the concentration present in the gel;
a dispersant;
a secondary thickener; or
another additive which is a stabilizer, an antifoaming agent, a buffer or an antifreezing agent.

8. A containerisation system according to claim 7, wherein the gel comprises by weight;
5 to 95% of hazardous product,
1 to 50% of surfactant,
0.1 to 50% of gelling agent, and
0 to 80% of solvent.

9. A containerisation system according to claim 8 wherein the gel comprises by weight:
25 to 80% of hazardous product,
2 to 15% of surfactant,
2 to 10% of gelling agent, and
3 to 50% of solvent.

10. A containerisation system according to claim 8 or 9 wherein the gel further comprises by weight:
1 to 25% of dispersant,
0.1 to 30% of secondary thickener, and
0 to 20% of other additives as defined in claim 7.

11. A containerisation system according to claim 10 wherein the gel comprises by weight:
2 to 8% of dispersant,
1 to 25% of secondary thickener, and
0.1 to 10% of other additives as defined in claim 7.

12. A containerisation system according to any one of the preceding claims wherein the gel has a viscosity of 600 to 30,000 centipoises.

13. A containerisation system according to claim 12, wherein the gel has a viscosity of 1,000 to 12,000 centipoises.

14. A containerisation system according to any one of the preceding claims wherein the gel has a specific gravity greater than 1.

15. A containerisation system according to claim 14, wherein the gel has a specific gravity greater than 1.05.

16. A containerisation system according to any one of the preceding claims wherein the gel has a phase different (phi) between the controlled shear stress and the resulting shear strain such that tg(phi) is less than or equal to 1.2.

17. A containerisation system according to any one of the preceding claims 17, wherein the gel has a spontaneity less than 25.

18. A containerisation system according to any one of the preceding claims wherein the bag comprises a polyethylene oxide; a starch or modified starch; an alkyl or hydroxyalkylcellulose; a carboxyalkylcellulose; a polyvinylether; poly(2,4-dimethyl-6-triazolylethylene); poly(vinylsulfonic acid); a polyanhydride; a low molecular weight urea-formaldehyde resin; a low molecular weight melamine-formaldehyde resin; a polyacrylate, a polymethacrylate or polyacrylic acid or a homologue thereof.

19. A containerisation system according to claim 18, wherein the bag comprises a polyethylene oxide which is polyethylene glycol; a hydroxyalkylcellulose which is hydroxymethyl-, hydroxyethyl- or hydroxypropyl-cellulose; a carboxyalkyl-cellulose which is carboxymethyl-cellulose; a polyvinyl ether which is polymethylvinylether; or a polymethacrylate which is poly(2-hydroxyethyl methacrylate).

20. A containerisation system according to any one of the preceding claims wherein the bag comprises polyethylene oxide, methylcellulose, or polyvinyl alcohol.

21. A containerisation system according to claim 20, where the bag comprises polyvinyl alcohol which is 40 to 100% alcoholysed or hydrolysed polyvinyl acetate.

22. A containerisation system according to claim 21, wherein the polyvinyl alcohol is 80 to 99% alcoholysed or hydrolysed polyvinyl acetate.

## Patentansprüche

1. Containerisierungssystem, umfassend ein im Wasser dispergierbares organisches Gel in einem in Wasser löslichen oder in Wasser dispergierbaren Beutel, wobei das Gel ein kontinuierliches System ist mit einer Phasendifferenz ϕ zwischen der kontrollierten Scherspannung und der daraus resultierenden Schiebung, so daß tg(ϕ) kleiner oder gleich 1,5 ist und mit einer Spontaneität von weniger als 75, wobei das Gel wirksame Mengen umfaßt von
einem gefährlichen Produkt,
gegebenenfalls organischem Lösungsmittel,
einem in Wasser löslichen oder in Wasser dispergierbaren grenzflächenaktiven Mittel, das ein nicht-ionisches grenzflächenaktives Mittel und gegebenenfalls ein anionisches oder amphoteres grenzflächenaktives Mittel umfaßt, und das ein flüssiges Gemisch mit dem gefährlichen Produkt und dem organischen Lösungsmittel, soweit vorhanden, bei einer Temperatur oberhalb von 70°C bilden kann,
einem gelbildenden Mittel, das bei 23°C flüssig oder fest ist und wenn es fest ist, eine kleinere Teilchengröße als 100 µm aufweist und das in einer Konzentration von mindestens 10 Gew.-% in dem flüssigen Gemisch aus dem gefährlichen Produkt, grenzflächenaktivem Mittel und organischem Lösungsmittel, soweit vorhanden, löslich ist, und
weniger als 3 Gew.-% Wasser.

2. Containerisierungssystem nach Anspruch 1, wobei das gefährliche Produkt eine landwirtschafliche Chemikalie ist.

3. Containerisierungssystem nach Anspruch 1 oder 2, wobei das gefährliche Produkt ein Pflanzenschutzmittel, ein Pflanzenwachstumsregulator, ein Pestizid oder ein Pflanzennährstoff ist.

4. Containerisierungssystem nach Anspruch 1, 2 oder 3, wobei das in Wasser lösliche oder in Wasser dispergierbare grenzflächenaktive Mittel ein flüssiges Gemisch mit dem gefährlichen Produkt und dem organischen Lösungsmittel, soweit vorhanden, bei einer Temperatur oberhalb von 50°C bilden kann.

5. Containerisierungssystem nach einem der vorangehenden AnSprüche, wobei das gelbildende Mittel flüssig oder ein Feststoff mit einer Teilchengröße von weniger als 20 µm ist.

6. Containerisierungssystem nach einem der vorangehenden Ansprüche, wobei das Gel weniger als 1 Gew.-% Wasser umfaßt.

7. Containerisierungssystem nach einem der vorangehenden Ansprüche, wobei das Gel ferner eine oder mehrere der folgenden Komponenten umfaßt:
ein organisches Lösungsmittel oder ein Gemisch von organischen Lösungsmitteln, in dem das gefährliche Produkt bei der in dem Gel vorliegenden Konzentration löslich ist,
ein Dispergiermittel,
ein zweites Verdickungsmittel oder
ein anderes Additiv, das ein Stabilisator, ein Antischaummittel, ein Puffer oder ein Frostschutzmittel ist.

8. Containerisierungssystem nach Anspruch 7, wobei das Gel, auf das Gewicht bezogen, umfaßt:
5 bis 95 % gefährliches Produkt,
1 bis 50 % grenzflächenaktives Mittel,
0,1 bis 50 % gelbildendes Mittel und
0 bis 80 % Lösungsmittel.

9. Containerisierungssystem nach Anspruch 8, wobei das Gel, auf das Gewicht bezogen, umfaßt:
25 bis 80 % gefährliches Produkt,
2 bis 15 % grenzflächenaktives Mittel,
2 bis 10 % gelbildendes Mittel und
3 bis 50 % Lösungsmittel.

10. Containerisierungssystem nach Anspruch 8 oder 9, wobei das Gel ferner, auf das Gewicht bezogen, umfaßt:
1 bis 25 % Dispergiermittel,
0,1 bis 30 % zweites Verdickungsmittel und
0 bis 20 % andere Additive, wie in Anspruch 7 definiert.

11. Containerisierungssystem nach Anspruch 10, wobei das Gel ferner, auf das Gewicht bezogen, umfaßt:
2 bis 8 % Dispergiermittel,
1 bis 25 % zweites Verdickungsmittel und
0,1 bis 10 % andere Additive, wie in Anspruch 7 definiert.

12. Containerisierungssystem nach einem der vorangehenden Ansprüche, wobei das Gel eine Viskosität von 600 bis 30 000 cP hat.

13. Containerisierungssystem nach Anspruch 12, wobei das Gel eine Viskosität von 1000 bis 12 000 cP hat.

14. Containerisierungssystem nach einem der vorangehenden Ansprüche, wobei das Gel ein spezifisches Gewicht von mehr als 1 hat.

15. Containerisierungssystem nach Anspruch 14, wobei das Gel ein spezifisches Gewicht von mehr als 1,05 hat.

16. Containerisierungssystem nach einem der vorangehenden Ansprüche, wobei das Gel eine Phasendifferenz (ϕ) zwischen der kontrollierten Scherspannung und der daraus resultierenden Schiebung hat, so daß tg(ϕ) kleiner als oder gleich 1,2 ist.

17. Containerisierungssystem nach einem der vorangehenden Ansprüche, wobei das Gel einen Spontaneität von weniger als 25 hat.

18. Containerisierungssystem nach einem der vorangehenden Ansprüche, wobei der Beutel ein Polyethylenoxid, eine Stärke oder modifizierte Stärke, eine Alkyl- oder Hydroxyalkylcellulose, eine Carboxyalkylcellulose, einen Polyvinylether, Poly(2,4-dimethyl-6-triazolylethylen), Poly(vinylsulfonsäure), ein Polyanhydrid, ein Harnstoff/Formaldehyd-Harz mit niedrigem Molekulargewicht, ein Melamin/Formaldehyd-Harz mit niedrigem Molekulargewicht, ein Polyacrylat, ein Polymethacrylat oder Polyacrylsäure oder ein Homologes davon umfaßt.

19. Containerisierungssystem nach Anspruch 18, wobei der Beutel ein Polyethylenoxid, das Polyethylenglykol ist, eine Hydroxyalkylcellulose, die Hydroxymethyl-, Hydroxyethyl- oder Hydroxypropylcellulose ist, eine Carboxyalkylcellulose, die Carboxymethylcellulose ist, einen Polyvinylether, der Polymethylvinylether ist, oder ein Polymethacrylat, das Poly(2-hydroxyethylmethacrylat) ist, umfaßt.

20. Containerisierungssystem nach einem der vorangehenden Ansprüche, wobei der Beutel Polyethylenoxid, Methylcellulose oder Polyvinylalkohol umfaßt.

21. Containerisierungssystem nach Anspruch 20, wobei der Beutel Polyvinylalkohol umfaßt, der 40 bis 100 % alkoholysiertes oder hydrolysiertes Polyvinylacetat ist.

22. Containerisierungssystem nach Anspruch 21, wobei der Polyvinylalkohol 80 bis 99 % alkoholysiertes oder hydrolysiertes Polyvinylacetat ist.

## Revendications

1. Système de conditionnement en récipient, comprenant un gel organique dispersable dans l'eau dans un sac hydrosoluble ou dispersable dans l'eau, dans lequel le gel est un système continu ayant une différence de phase (phi) entre la tension de cisaillement contrôlée et la déformation de cisaillement résultante telle que tg(phi) soit inférieure ou égale à 1,5, et ayant une spontanéité inférieure à 75, gel qui comprend des quantités efficaces :
d'un produit dangereux ;
facultativement, d'un solvant organique ;
d'un surfactant hydrosoluble ou dispersable dans l'eau qui comprend un surfactant non ionique et, facultativement, un surfactant anionique ou amphotère, et qui est capable de former un mélange liquide avec le produit dangereux et le solvant organique, s'il est présent, à une température supérieure à 70°C ;
d'un agent gélifiant qui est liquide ou solide à 23°C et qui, s'il est solide, a un diamètre de particules inférieur à 100 micromètres, et qui est soluble à une concentration d'au moins 10 % en poids dans le mélange liquide du produit dangereux, du surfactant et du solvant organique, s'il est présent ; et
d'une quantité d'eau inférieure à 3 % en poids.

2. Système de conditionnement en récipient suivant la revendication 1, dans lequel le produit dangereux est un agent agrochimique.

3. Système de conditionnement en récipient suivant la revendication 1 ou 2, dans lequel le produit dangereux est un agent de protection des végétaux, un régulateur de croissance de plantes, un pesticide ou une substance nutritive pour végétaux.

4. Système de conditionnement en récipient suivant la revendication 1, 2 ou 3, dans lequel le surfactant hydrosoluble ou dispersable dans l'eau est capable de former un mélange liquide avec le produit dangereux et le solvant organique, lorsqu'il est présent, à une température supérieure à 50°C.

5. Système de conditionnement en récipient suivant l'une quelconque des revendications précédentes, dans lequel l'agent gélifiant est un agent liquide ou un agent solide ayant un diamètre de particules inférieur à 20 micromètres.

6. Système de conditionnement en récipient suivant l'une quelconque des revendications précédentes, dans lequel le gel comprend moins de 1 % en poids d'eau.

7. Système de conditionnement en récipient suivant l'une quelconque des revendications précédentes, dans lequel le gel comprend en outre un ou plusieurs des constituants suivants :
un solvant organique ou un mélange de solvants organiques dans lequel le produit dangereux est soluble à la concentration présente dans le gel ;
un dispersant ;
un épaississant secondaire ; ou
un autre additif qui est un stabilisant, un agent antimousse, un tampon ou un agent antigel.

8. Système de conditionnement en récipient suivant la revendication 7, dans lequel le gel comprend, en poids :
5 à 95 % de produit dangereux,
1 à 50 % de surfactant,
0,1 à 50 % d'agent gélifiant, et
0 à 80 % de solvant.

9. Système de conditionnement en récipient suivant la revendication 8, dans lequel le gel comprend, en poids :
25 à 80 % de produit dangereux,
2 à 15 % de surfactant,
2 à 10 % d'agent gélifiant, et
3 à 50 % de solvant.

10. Système de conditionnement en récipient suivant la revendication 8 ou 9, dans lequel le gel comprend en outre, en poids :
1 à 25 % de dispersant,
0,1 à 30 % d'épaississant secondaire, et
0 à 20 % d'autres additifs répondant à la définition suivant la revendication 7.

11. Système de conditionnement en récipient suivant la revendication 10, dans lequel le gel comprend, en poids :
2 à 8 % de dispersant,
1 à 25 % d'épaississant secondaire, et
0,1 à 10 % d'autres additifs répondant à la définition suivant la revendication 7.

12. Système de conditionnement en récipient suivant l'une quelconque des revendications précédentes, dans lequel le gel a une viscosité de 600 à 30 000 centipoises.

13. Système de conditionnement en récipient suivant la revendication 12, dans lequel le gel a une viscosité de 1000 à 12 000 centipoises.

14. Système de conditionnement de récipient suivant l'une quelconque des revendications précédentes, dans lequel le gel a une densité supérieure à 1.

15. Système de conditionnement en récipient suivant la revendication 14, dans lequel le gel a une densité supérieure à 1,05.

16. Système de conditionnement en récipient suivant l'une quelconque des revendications précédentes, dans lequel le gel présente une différence de phase (phi) entre la tension de cisaillement contrôlée et la déformation de cisaillement résultante telle que tg(phi) soit inférieure ou égale à 1,2.

17. Système de conditionnement en récipient suivant l'une quelconque des revendications précédentes, dans lequel le gel a une spontanéité inférieure à 25.

18. Système de conditionnement en récipient suivant l'une quelconque des revendications précédentes, dans lequel le sac comprend un polymère d'oxyde d'éthylène ; un amidon ou amidon modifié ; une alkyl- ou hydroxyalkylcellulose ; une carboxyalkylcellulose ; un polymère d'éther vinylique ; un poly(2,4-diméthyl-6-triazolyléthylène) ; un poly(acide vinylsulfonique) ; un polyanhydride ; une résine urée-formaldéhyde de bas poids moléculaire ; une résine mélamine-formaldéhyde de bas poids moléculaire ; un polyacrylate, un polyméthacrylate ou un polymère a'acide acrylique ou un de ses homologues.

19. Système de conditionnement en récipient suivant la revendication 18, dans lequel le sac comprend un polymère d'oxyde d'éthylène qui consiste en un polyéthylèneglycol ; une hydroxyalkylcellulose qui consiste en hydrométhyl-, hydroxyéthyl- ou hydroxypropylcellulose ; une carboxyalkylcellulose qui consiste en carboxyméthylcellulose ; un polymère d'éther vinylique qui consiste en un polymère d'éther de méthyle et de vinyle ; ou un polyméthacrylate qui consiste en un poly(méthacrylate de 2-hydroxyéthyle).

20. Système de conditionnement en récipient suivant l'une quelconque des revendications précédentes, dans lequel le sac comprend un polymère d'oxyde d'éthylène, de la méthylcellulose ou un polymère d'alcool vinylique.

21. Système de conditionnement en récipient suivant la revendication 20, dans lequel le sac comprend un polymère d'alcool vinylique qui est un polymère d'acétate de vinyle ayant subi 40 à 100 % d'alcoolyse ou d'hydrolyse.

22. Système de conditionnement en récipient suivant la revendication 21, dans lequel le polymère d'alcool vinylique consiste en un polymère d'acétate de vinyle ayant subi 80 à 99 % d'alcoolyse ou d'hydrolyse.
